# EUROPÄISCHE PATENTSCHRIFT

(11) **EP 4 309 487 B1**
(45) Veröffentlichungstag und Bekanntmachung des Hinweises auf die Patenterteilung: **11.06.2025**
(21) Anmeldenummer: 23170558.3
(22) Anmeldetag: 28.04.2023
(51) Int. Cl.: A01D 43/08, A01D 67/00, B62D 21/03, B62D 21/12

(54) **FELDHÄCKSLER MIT EINER RAHMENBAUGRUPPE**
FORAGE HARVESTER WITH A FRAME ASSEMBLY
RAMASSEUSE-HACHEUSE DOTÉE D'UN MODULE DE CADRE

(30) Priorität: 22.07.2022 DE 102022118433
(43) Veröffentlichungstag der Anmeldung: 24.01.2024
(73) Patentinhaber: CLAAS Selbstfahrende Erntemaschinen GmbH, 33428 Harsewinkel (DE)
(72) Erfinder: RATHJENS, Jochen, 21635 Jork (DE); STADTMANN, Hermann, 33428 Harsewinkel (DE)
(74) Vertreter: CLAAS Gruppe

(56) Entgegenhaltungen:
- DE-A1- 102019 215 146
- DE-A1- 102020 115 944
- GB-A- 2 114 070

## Beschreibung

Die vorliegende Anmeldung betrifft einen Feldhäcksler mit einer Rahmenbaugruppe gemäß dem Oberbegriff des unabhängigen Patentanspruchs 1.

Ein Feldhäcksler weist typischerweise ein Fahrgestell bzw. eine Rahmenbaugruppe auf mit sich in Längsrichtung des Feldhäckslers erstreckenden und durch in Querrichtung verlaufende Träger miteinander verbundenen Rahmenelementen, an der eine Vorderachse, eine Hinterachse, ein Motor, eine Häckseltrommelbaugruppe etc. montiert sind. Ein Feldhäcksler mit einem derartigen Fahrgestell bzw. einer derartigen Rahmenbaugruppe ist beispielsweise aus der DE 10 2020 115 944 A1 bekannt.

Hauptbestandteil der Häckseltrommelbaugruppe ist eine mit Messern besetzte Häckseltrommel. Indem ein Strom von Erntegut auf die Häckseltrommel zu gefördert wird, während die Häckseltrommel rotiert, wird das Erntegut in Stücke geschnitten. Um trotz wechselnden Widerstands durch das Erntegut gleichmäßig zu rotieren, muss die Häckseltrommel ein großes Trägheitsmoment und dementsprechend großen Durchmesser und hohe Masse aufweisen. Dies, im Betrieb der Häckseltrommel auftretende stark schwankenden Schneidkräfte an den Messern sowie die weiteren im Betrieb des Feldhäckslers auftretenden Kräfte aufgrund von weiteren das Erntegut verarbeitenden oder dem Antrieb des Feldhäckslers dienender Arbeitsaggregate sorgen für eine erhebliche Belastung der Rahmenbaugruppe während des Betrieb des Feldhäckslers.

Herkömmlicherweise bestehen Rahmenbaugruppen aus den zuvor genannten verschiedenen Rahmenkomponenten, die miteinander zu der Rahmenbaugruppe verschweißt werden. Nachteilig bei derartigen Rahmenbaugruppen ist allerdings, dass Schweißverbindungen potentielle Schwachstellen für ein Versagen der Struktur bei, insbesondere wiederkehrenden, Überlastzuständen darstellen. Kommt es zu einem Versagen einer Schweißverbindung während des Betriebs des Feldhäckslers, ist es mit einem erheblichen Aufwand verbunden die Rahmenstruktur wieder Instand zu setzen, da eine Demontage von beschädigten Rahmenkomponenten und eine anschließende Montage von neuen Rahmenkomponenten nicht so einfach möglich ist. Hieraus resultierende Ausfallzeiten des Feldhäckslers und Kosten für die Instandsetzung können für einen Landwirt oder Lohnunternehmer von erheblicher betriebswirtschaftlicher Bedeutung sein.

Ausgehend hiervon ist es demnach die Aufgabe der vorliegenden Erfindung einen Feldhäcksler mit einer Rahmenbaugruppe anzugeben, die sich durch eine hohe Belastbarkeit, insbesondere in Bereichen, die hohen und wiederkehrenden Belastungszuständen ausgesetzt sind, eine lange Lebensdauer sowie durch ein optimiertes Gewicht bzw. eine optimierte Gewichtsverteilung auszeichnet.

Diese Aufgabe wird erfindungsgemäß durch die Merkmale des unabhängigen Patentanspruchs 1 gelöst, wobei vorteilhafte Weiterbildungen des erfindungsgemäßen Feldhäckslers Gegenstand der entsprechenden abhängigen Patentansprüche 2 bis 13 sind.

Demnach betrifft die vorliegende Erfindung einen Feldhäcksler mit einer Rahmenbaugruppe. Die Rahmenbaugruppe umfasst zwei sich in Längsrichtung des Feldhäckslers erstreckende Rahmenelemente, ein in Querrichtung des Feldhäckslers zwischen den sich in Längsrichtung des Feldhäckslers erstreckenden Rahmenelementen angeordnetes Rahmenelement, das auch als Querrahmenstrebe bezeichnet werden kann, und zwei Klemmlager zur Lagerung einer Häckseltrommelbaugruppe. Jeweils ein Klemmlager ist jeweils einem sich in Längsrichtung des Feldhäckslers erstreckenden Rahmenelement zugeordnet. Der Feldhäcksler ist dadurch gekennzeichnet, dass das in Querrichtung des Feldhäckslers angeordnete Rahmenelement mit jeweils einem sich in Längsrichtung des Feldhäckslers erstreckenden Rahmenelement sowie einem dem jeweiligen sich in Längsrichtung des Feldhäckslers erstreckenden Rahmenelement zugeordneten Klemmlager in zumindest einem gemeinsamen Befestigungspunkt kraft- und/oder formschlüssig verbunden ist.

Mit anderen Worten, das in Querrichtung des Feldhäckslers zwischen den beiden sich in Längsrichtung erstreckenden Rahmenelementen angeordnete Rahmenelement ist mit jeweils einer Seite in zumindest einem gemeinsamen Befestigungspunkt mit einem Rahmenelement der beiden sich in Längsrichtung des Feldhäckslers erstreckenden Rahmenelemente und einem Klemmlager der beiden Klemmlager form- und/oder kraftschlüssig verbunden.

Durch die Befestigung des in Querrichtung des Feldhäckslers angeordneten Rahmenelements jeweils mit einem sich in Längsrichtung des Feldhäckslers erstreckenden Rahmenelement und einem diesem sich in Längsrichtung des Feldhäckslers erstreckenden Rahmenelement zugeordneten Klemmlager in zumindest einem gemeinsamen Befestigungspunkt kann eine optimale Kraftleitung innerhalb der Rahmenbaugruppe erzielt werden. Hohe Belastungszustände während des Betriebs des Feldhäckslers können optimal kompensiert werden, gleichzeitig kann eine hohe Lebensdauer der Rahmenbaugruppe bzw. der Rahmenkomponenten erzielt werden und eine für den Betrieb des Feldhäckslers auf einer landwirtschaftlichen Fläche hinreichend starre und tragende Rahmenstruktur ausgebildet werden.

Insbesondere die im Betrieb der Häckseltrommel auftretende stark schwankenden Schneidkräfte an den Messern können so optimal aufgenommen werden, ohne dass es hierbei lokal zu unerwarteten und überhöhten Belastungszuständen kommt, hinsichtlich derer die Rahmenbaugruppe nicht ausgelegt ist.

Weiterhin erlaubt die erfindungsgemäße Anbindung eine besonders unkomplizierte Wartung bzw. Instandsetzung der Rahmenbaugruppe, sofern ein kritischer Verschleißzustand einer oder mehrerer der Rahmenkomponenten ermittelt wird oder ein Schadensfall an einer oder mehreren der Rahmenkomponenten aufgetreten ist. Die kraft- und/oder formschlüssige Verbindung in dem jeweils zumindest einen gemeinsamen Befestigungspunkt kann ohne besonderen Aufwand gelöst werden, wodurch ein unkomplizierter Austausch einer einzelnen oder mehrerer Rahmenkomponenten und somit eine effiziente Wartung bzw. Instandsetzung erfolgen kann.

Gemäß einer vorteilhaften Weiterbildung der Erfindung ist vorgesehen, dass jedes Klemmlager ein erstes Klemmlagerelement und ein an dem ersten Klemmlagerelement schwenkbar befestigtes zweites Klemmlagerelement umfasst, wobei das in Querrichtung des Feldhäckslers angeordnete Rahmenelement mit dem jeweils einen sich in Längsrichtung des Feldhäckslers erstreckenden Rahmenelement sowie dem ersten Klemmlagerelement des dem jeweiligen sich in Längsrichtung des Feldhäckslers erstreckenden Rahmenelement zugeordneten Klemmlagers in dem zumindest einen gemeinsamen Befestigungspunkt kraft- und/oder formschlüssig verbunden ist.

Gemäß einer weiteren vorteilhaften Weiterbildung der Erfindung ist vorgesehen, dass jedes der sich in Längsrichtung des Feldhäckslers erstreckenden Rahmenelemente als Hohlprofil ausgebildet ist, wobei die Klemmlager, insbesondere die ersten Klemmlagerelemente der Klemmlager, in die als Hohlprofile ausgebildeten sich in Längsrichtung des Feldhäckslers erstreckenden Rahmenelemente zumindest bereichsweise eingesetzt sind.

Hierdurch kann eine Rahmenbaugruppe mit optimiertem Gewicht bzw. optimierter Gewichtsverteilung geschaffen werden, die den beschränkten vorhandenen Bauraum im Feldhäcksler für die erfindungsgemäße Anbindung der Rahmenkomponenten ideal nutzt.

Gemäß einer vorteilhaften Weiterbildung der Erfindung ist vorgesehen, dass das in Querrichtung des Feldhäckslers angeordnete Rahmenelement zwei einander in Querrichtung des Feldhäckslers gegenüberliegende Enden umfasst, wobei jedes Ende einen plattenförmig ausgebildeten Anbindungsbereich umfasst, wobei das in Querrichtung des Feldhäckslers angeordnete Rahmenelement mittels jeweils eines plattenförmig ausgebildeten Anbindungsbereichs mit dem jeweils einen sich in Längsrichtung des Feldhäckslers erstreckenden Rahmenelement sowie dem dem jeweiligen sich in Längsrichtung des Feldhäckslers erstreckenden Rahmenelement zugeordneten Klemmlager, insbesondere dem ersten Klemmlagerelement des Klemmlagers, in dem zumindest einem gemeinsamen Befestigungspunkt kraft- und/oder formschlüssig verbunden ist.

Hierdurch wird eine Struktur an dem in Querrichtung des Feldhäckslers angeordneten Rahmenelement geschaffen mit der die erfindungsgemäße Anbindung komfortabel zu realisieren ist. Durch die plattenförmige Ausgestaltung des Anbindungsbereichs wird insbesondere eine präzise Ausrichtung des in Querrichtung des Feldhäckslers angeordneten Rahmenelements zwischen den sich in Längsrichtung des Feldhäckslers erstreckenden Rahmenelementen erzielt, indem das in Querrichtung des Feldhäckslers angeordnete Rahmenelement flächig an die Außenwandungen der sich in Längsrichtung des Feldhäckslers erstreckenden Rahmenelemente zur Anlage kommt.

Gemäß einer vorteilhaften Weiterbildung der Erfindung ist vorgesehen, dass die ersten Klemmlagerelemente der Klemmlager und/oder die Anbindungsbereiche des in Querrichtung des Feldhäckslers angeordneten Rahmenelements kraftflussoptimiert ausgestaltet sind und zwar derart, dass die ersten Klemmlagerelemente und/oder die Anbindungsbereiche in den für die Kraftleitung und Anbindung vorgesehenen Bereichen Materialanhäufungen aufweisen.

Hierdurch wird die optimierte Gewichtsverteilung bzw. das optimierte Gewicht der Rahmenbaugruppe weiter begünstigt. Nur dort wo Material zur Kraftleitung und Anbindung erforderlich ist, ist solches auch vorhanden. Bereiche die für die Kraftleitung nicht benötigt werden weisen kein Material auf.

Gemäß einer vorteilhaften Weiterbildung der Erfindung ist vorgesehen, dass die ersten Klemmlagerelemente der Klemmlager als Gussbauteile, insbesondere als Sphärogussbauteile, ausgebildet sind.

Hierdurch wird eine äußerst belastungsfähige Struktur geschaffen, die optimal für die Aufnahme der durch den Betrieb der Häckseltrommel erzeugten und in die Rahmenbaugruppe eingeleiteten Kräfte ist und eine lange Lebensdauer des ersten Klemmlagerelements gewährleistet.

Gemäß einer vorteilhaften Weiterbildung der Erfindung ist vorgesehen, dass das in Querrichtung des Feldhäckslers angeordnete Rahmenelement mit dem jeweils einen sich in Längsrichtung des Feldhäckslers erstreckenden Rahmenelement sowie dem dem jeweiligen sich in Längsrichtung des Feldhäckslers erstreckenden Rahmenelement zugeordneten Klemmlager in einer Vielzahl gemeinsamer Befestigungspunkte kraft- und/oder formschlüssig verbunden ist.

Vorzugsweise ist das in Querrichtung des Feldhäckslers angeordnete Rahmenelement mit dem jeweils einen sich in Längsrichtung des Feldhäckslers erstreckenden Rahmenelement sowie dem dem jeweiligen sich in Längsrichtung des Feldhäckslers erstreckenden Rahmenelement zugeordneten Klemmlager in vier gemeinsamen Befestigungspunkten kraft- und/oder formschlüssig verbunden ist.

Die erfindungsgemäße Anbindung in einer Vielzahl an, vorzugsweise vier, gemeinsamen Befestigungspunkten begünstigt die Kraftleitung innerhalb der Rahmenstruktur und die Stabilität der Rahmenbaugruppe bei auftretenden hohen Belastungszuständen weiter in erheblichem Maße.

Gemäß einer vorteilhaften Weiterbildung der Erfindung ist vorgesehen, dass die Verbindung in dem zumindest einen Befestigungspunkt mittels einer Schraubverbindung, vorzugsweise mittels einer Durchschraubverbindung, ausgebildet ist.

Hierdurch kann eine besonders unkomplizierte Montage und Demontage der Rahmenbaugruppe erfolgen. Gleichzeitig wird durch die Nutzung von Schraubverbindungen, insbesondere Durchschraubverbindungen, eine äußerst belastungsfähige Anbindung der Rahmenkomponenten erzielt, die gut im Hinblick auf die auftretenden Belastungszustände dimensioniert werden kann.

Gemäß einer vorteilhaften Weiterbildung der Erfindung ist vorgesehen, dass die Klemmlager als sphärische Klemmlager ausgebildet sind.

Durch diese Ausgestaltung der Klemmlager legt nicht jedes Klemmlager für sich die Drehachse fest, sondern jedes Klemmlager definiert nur einen einzigen Punkt, den Mittelpunkt der Kugelfläche, als einen Punkt, durch den die Drehachse verlaufen muss. So kann die Häckseltrommelbaugruppe frei von innerer Spannung an den Rahmenteilen montiert werden und relativ zu diesen reibungs- und verschleißarm rotieren.

Gemäß einer vorteilhaften Weiterbildung der Erfindung ist vorgesehen, dass die Häckseltrommelbaugruppe eine in den Klemmlagern drehbar aufgenommene Welle und einen mit der Welle drehfest verbundenen Adapter für einen Erntevorsatz umfasst.

Indem die Welle und mit ihr der Adapter gedreht wird, kann die Höhe des Erntevorsatzes über dem Boden besonders präzise angepasst werden.

Insbesondere umfasst die Häckseltrommelbaugruppe eine an der Welle drehbar gelagerte Häckseltrommel.

Die Welle, die in den Klemmlagern drehbar gelagert ist, muss somit nur kleine, langsame Drehungen zum Verstellen des Adapters ausführen und dreht demnach nicht mit der hohen Drehzahl der Häckseltrommel. Demnach kann die Welle in dem Klemmlager gleitgelagert sein, was zu einer reduzierten Komplexität der Lagerung führt.

Vorzugsweise umfasst der Feldhäcksler wenigstens ein hydraulisches Stellglied zum Antreiben einer Schwenkbewegung des Adapters.

Hierdurch kann die Höhe des Erntevorsatzes über dem Boden besonders unkompliziert und vorzugsweise automatisch eingestellt werden.

Die vorliegende Erfindung wird nachstehend anhand der in den Figuren abgebildeten Ausführungsformen näher beschrieben.

Es zeigen:
- FIG. 1: eine schematische und exemplarische Darstellung eines erfindungsgemäßen Feldhäckslers;
- FIG. 2: eine schematische und exemplarische Darstellung einer erfindungsgemäßen Rahmenbaugruppe des erfindungsgemäßen Feldhäckslers und einer an der Rahmenbaugruppe montierten Häckseltrommelbaugruppe;
- FIG. 3: eine schematische und exemplarische Teildarstellung der erfindungsgemäßen Rahmenbaugruppe des erfindungsgemäßen Feldhäckslers ohne montierte Häckseltrommelbaugruppe;
- FIG. 4: eine schematische und exemplarische Darstellung der erfindungsgemäßen Klemmlager der erfindungsgemäßen Rahmenbaugruppe in einer ersten Stellung (Schließstellung); und
- FIG. 5: eine schematische und exemplarische Darstellung der erfindungsgemäßen Klemmlager der erfindungsgemäßen Rahmenbaugruppe in einer zweiten Stellung (Offenstellung bzw. Feststellposition).

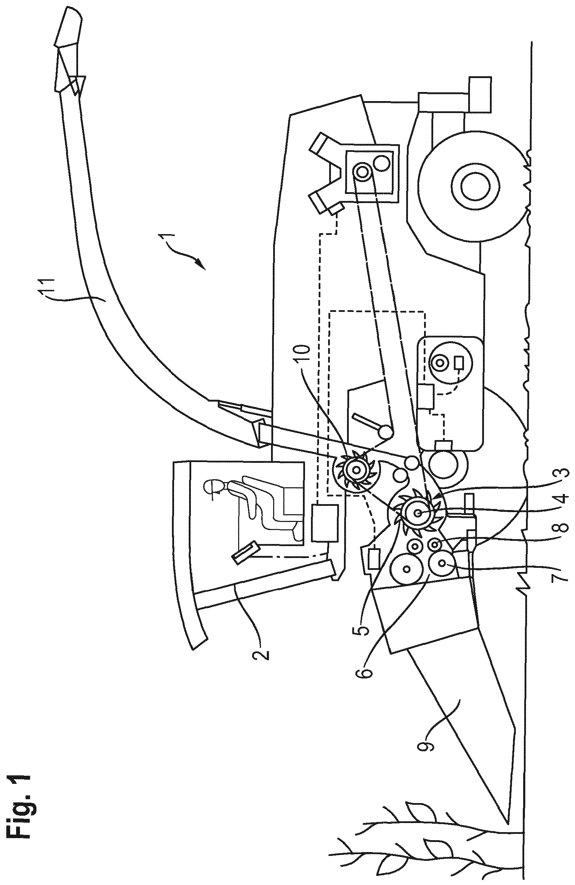

FIG. 1 zeigt eine schematische und exemplarische Darstellung eines erfindungsgemäßen Feldhäckslers 1. Die Karosserie des Feldhäckslers 1 ist in ihrem Vorderteil, unterhalb einer Fahrerkabine 2, aufgeschnitten dargestellt, um interne, Erntegut verarbeitende Baugruppen bzw. Arbeitsaggregate des Feldhäckslers 1 zeigen zu können. Eine dieser Baugruppen bzw. Arbeitsaggregate ist eine sogenannte Häckseltrommelbaugruppe 3 mit einer um eine sich in Fahrzeugquerrichtung erstreckende Rotationsachse 4 rotierende Häckseltrommel 5.

Der Häckseltrommelbaugruppe 3 ist eine Fördereinrichtung 6 für Erntegut vorgelagert. Die Fördereinrichtung 6 umfasst mehrere Walzenpaare 7, 8, die jeweils einen Spalt begrenzen und gegensinnig drehangetrieben sind, um das durch den Spalt hindurch geförderte Erntegut der Häckseltrommel 5 zuzuführen.

Die Fördereinrichtung 5 trägt wiederum einen in Anpassung an das aufzunehmende Erntegut austauschbaren Erntevorsatz 9.

In der Häckseltrommelbaugruppe 3 zerkleinertes Erntegut wird einem Nachbeschleuniger 10 zugeführt, der dem zerkleinerten Erntegut die nötige Geschwindigkeit verleiht, um einen Auswurfkrümmer 11 zu durchlaufen und in ein - in den FIGs. nicht dargestelltes - Begleitfahrzeug übergeladen zu werden.

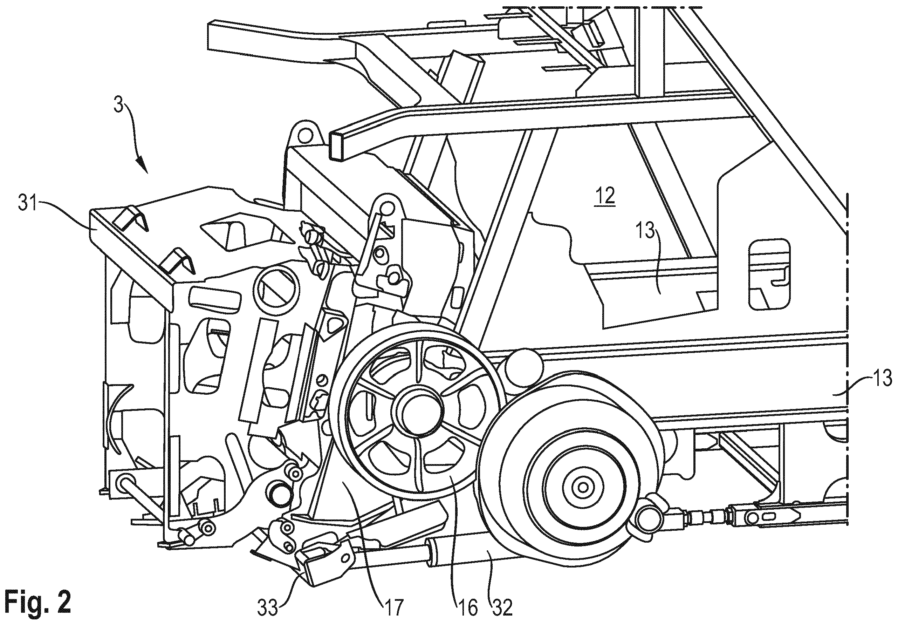

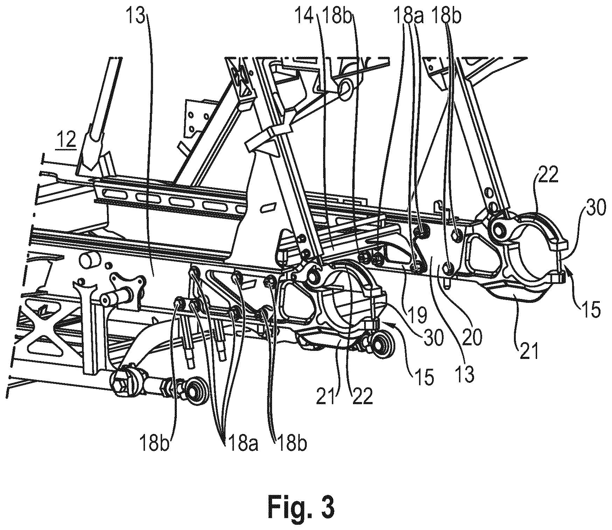

Die FIGs. 2 bis 5 zeigen jeweils einen vorderen Bereich einer Rahmenbaugruppe 12 des Feldhäckslers 1, an der die Häckseltrommelbaugruppe 3 drehbar gelagert ist. In FIG. 2 ist die Rahmenbaugruppe 12 mit montierter Häckseltrommelbaugruppe 3, in den FIGs. 3 bis 5 ist die Rahmenbaugruppe 12 hingegen ohne montierte Häckseltrommelbaugruppe 3 dargestellt. An der Rahmenbaugruppe 12 sind zumindest eine Vorderachse sowie eine Hinterachse des Feldhäckslers 1 aufgehängt. Die Rahmenbaugruppe 12 umfasst zwei sich in Längsrichtung des Feldhäckslers 1 erstreckende Rahmenelemente 13, die jeweils als Hohlprofile ausgebildet sind. Zwischen den beiden sich in Längsrichtung des Feldhäckslers 1 erstreckenden Rahmenelementen 13 ist im vorderen Bereich der Rahmenbaugruppe 12 ein sich in Querrichtung des Feldhäckslers 1 erstreckendes Rahmenelement 14, das auch als Querrahmenstrebe bezeichnet werden kann, angeordnet. Weiterhin umfasst die Rahmenbaugruppe 12 des Feldhäckslers 1 zwei Klemmlager 15 zur Lagerung der Häckseltrommelbaugruppe 3, wobei jeweils ein Klemmlager 15 jeweils einem sich in Längsrichtung des Feldhäckslers 1 erstreckenden Rahmenelement 13 zugeordnet ist.

Das vordere Ende der sich in Längsrichtung des Feldhäckslers 1 erstreckenden Rahmenelemente 13 ist in FIG. 2 hinter einer die Drehung der Häckseltrommel 5 antreibenden Riemenscheibe 16 bzw. einem die Häckseltrommel 5 umgebenden Gehäuse 17 der Häckseltrommelbaugruppe 3 verborgen.

Das in Querrichtung des Feldhäckslers 1 angeordnete Rahmenelement 14 ist mit jeweils einem sich in Längsrichtung des Feldhäckslers 1 erstreckenden Rahmenelement 13 sowie einem dem jeweiligen sich in Längsrichtung des Feldhäckslers 1 erstreckenden Rahmenelement 13 zugeordneten Klemmlager 15 in zumindest einem gemeinsamen Befestigungspunkt 18a kraft- und/oder formschlüssig verbunden. Mit anderen Worten, das sich in Querrichtung des Feldhäckslers 1 erstreckende Rahmenelement 14 ist mit jeweils einem Ende der sich in Querrichtung des Feldhäcksler 1 gegenüberliegenden Enden mit einem an das entsprechende Ende angrenzenden sich in Längsrichtung des Feldhäckslers 1 erstreckenden Rahmenelement 13 und einem diesem Rahmenelement 13 zugeordneten Klemmlager 15 in zumindest einem gemeinsamen Befestigungspunkt 18a kraft- und/oder formschlüssig verbunden. Die Verbindung der Elemente 13, 14, 15 in jeweils zumindest einem gemeinsamen Befestigungspunkt 18a ist in einer bevorzugten, in der FIG. 3 dargestellten Ausführungsform mittels einer bzw. als Schraubverbindung, vorzugsweise als Durchgangsschraubverbindung, ausgebildet.

Vorzugsweise wird die jeweilige Verbindung von dem in Querrichtung des Feldhäckslers 1 angeordnetem Rahmenelement 14 mit einem sich in Längsrichtung des Feldhäckslers 1 erstreckenden Rahmenelement 13 sowie einem diesem sich in Längsrichtung des Feldhäckslers 1 erstreckenden Rahmenelement 13 zugeordneten Klemmlager 15 nicht über nur einen gemeinsamen Befestigungspunkt 18a ausgebildet. Vielmehr ist eine Vielzahl solcher gemeinsamen Befestigungspunkte 18a für eine solche Verbindung vorgesehen. Gemäß einer bevorzugten Ausführungsform, die in FIG. 3 dargestellt ist, umfasst eine solche Verbindung jeweils vier gemeinsame Befestigungspunkte 18a, in denen die zuvor genannten Elemente 13, 14, 15 der Rahmenbaugruppe kraft- und/oder formschlüssig miteinander verbunden sind. Die Verbindung der Elemente 13, 14, 15 der Rahmenbaugruppe 12 in jeweils zumindest einem gemeinsamen Befestigungspunkt 18a sorgt für eine starre Anbindung von dem in Querrichtung des Feldhäckslers 1 angeordneten Rahmenelement 14, der Rahmenquerstrebe, den beiden sich in Längsrichtung des Feldhäckslers 1 erstreckenden Rahmenelementen 13 und den beiden Klemmlagern 15 und eine tragende Rahmenbaugruppe 12. Weiterhin wird durch den jeweils zumindest einen gemeinsamen Befestigungspunkt 18a eine vorteilhafte Kraftleitung zwischen den Elementen 13, 14 und 15 erzielt.

Das in Querrichtung des Feldhäckslers 1 angeordnete Rahmenelement 14 umfasst an jedem der sich in Querrichtung gegenüberliegenden Enden einen, insbesondere in FIG. 3 dargestellten, plattenförmig ausgebildeten Anbindungsbereich 19 bzw. jedes Ende des in Querrichtung des Feldhäckslers 1 angeordneten Rahmenelements 14 umfasst einen plattenförmig ausgebildeten Anbindungsbereich 19, der im montierten Zustand der Rahmenbaugruppe 12 an einer Außenwandung 20 jeweils eines Rahmenelements 13 der beiden sich in Längsrichtung des Feldhäckslers 1 erstreckenden Rahmenelemente 13 flächig anliegt und für die zuvor beschriebene Verbindung in zumindest einem gemeinsamen Befestigungspunkt 18a genutzt wird. Die beiden Außenwandungen 20 der zwei sich in Längsrichtung des Feldhäckslers 1 erstreckenden Rahmenelemente 13, an denen jeweils ein plattenförmig ausgebildeter Anbindungsbereich 19 des in Querrichtung des Feldhäckslers 1 angeordneten Rahmenelements 14 anliegt, sind im montierten Zustand der Rahmenbaugruppe 12 einander zugewandt angeordnet bzw. ausgerichtet. Der plattenförmig ausgebildete Anbindungsbereich 19 ist vorzugsweise derart kraftflussoptimiert ausgestaltet, dass der Anbindungsbereich 19 in den für die Kraftleitung und Anbindung vorgesehenen bzw. erforderlichen Bereichen Materialanhäufungen aufweist.

Die beiden Klemmlager 15 umfassten jeweils ein erstes Klemmlagerelement 21 und ein zweites Klemmlagerelement 22. Das zweite Klemmlagerelement 22 ist schwenkbar an dem ersten Klemmlagerelement 21 befestigt. Die schwenkbare Befestigung des zweiten Klemmlagerelements 22 an dem ersten Klemmlagerelement 21 kann beispielsweise über eine Kombination aus Lagerbolzen und Lagerhülse, wie in den FIGs. 3 bis 5 dargestellt, oder aber auch über andere Lagerungskonzepte realisiert sein. Im montierten Zustand des Klemmlagers 15 an dem entsprechenden sich in Längsrichtung des Feldhäckslers 1 erstreckenden Rahmenelement 13 ist das erste Klemmlagerelement 21 ort- bzw. positionsfest zu dem entsprechenden Rahmenelement 13 angeordnet. Mit anderen Worten, das erste Klemmlagerelement 21 kann sich nicht relativ zu dem entsprechenden Rahmenelement 13 bewegen, das zweite Klemmlagerelement 22 kann hingegen relativ zum ersten Klemmlagerelement 21 verschwenkt bzw. verbracht werden.

Jedes Klemmlager 15, insbesondere das erste Klemmlagerelement 21 eines jeden Klemmlagers 15, ist in das entsprechende sich in Längsrichtung des Feldhäckslers 1 erstreckende Rahmenelement 13, das als Hohlprofil ausgebildet ist, zumindest bereichsweise eingesetzt bzw. eingesteckt. Zumindest bereichsweise bedeutet in diesem Zusammenhang, dass ein die Häckseltrommelgruppe 3 aufnehmender bzw. der Lagerung dienender Bereich bzw. Sektor des ersten Klemmlagerelements 21 nicht innerhalb des sich in Längsrichtung des Feldhäckslers 1 erstreckenden Rahmenelements 13 angeordnet ist, sondern, wie in den FIGs. 3 bis 5 zu erkennen, dem jeweiligen sich in Längsrichtung des Feldhäckslers 1 erstreckenden Rahmenelement 13 vorsteht. Jedes in ein entsprechendes sich in Längsrichtung des Feldhäckslers 1 erstreckendes Rahmenelement 13 eingesetzte erste Klemmlagerelement 21 ist im montierten Zustand der Rahmenbaugruppe 12, wie zuvor bereits beschrieben, in zumindest einem gemeinsamen Befestigungspunkt 18a, vorzugsweise in vier gemeinsamen Befestigungspunkten 18a, mit dem entsprechenden Rahmenelement 13 sowie dem in Querrichtung des Feldhäckslers 1 angeordneten Rahmenelement 14 kraft- und/oder formschlüssig verbunden, vorzugsweise mit diesen Elementen 13, 14 verschraubt. Ähnlich wie die plattenförmig ausgebildeten Anbindungsbereiche 19 des in Querrichtung des Feldhäckslers 1 angeordneten Rahmenelements 14, ist das erste Klemmlagerelement 21 vorzugsweise derart kraftflussoptimiert ausgestaltet, dass das erste Klemmlagerelement 21 in den für die Kraftleitung und Anbindung vorgesehenen bzw. erforderlichen Bereichen Materialanhäufungen aufweist. Hierdurch wird eine hoch belastbare Struktur mit optimiertem Gewicht bzw. optimierter Gewichtsverteilung realisiert. Vorzugsweise ist das erste Klemmlagerelement 21 als Gussbauteil, besonders bevorzugt als Sphärogussbauteil, ausgebildet. Alternativ ist auch eine Ausgestaltung als Stahlgussbauteil vorstellbar.

Neben der Verbindung des ersten Klemmlagerelements 21 in dem zumindest einen gemeinsamen Befestigungspunkt 18a kann das erste Klemmlagerelement 21 weiterhin in einigen weiteren, insbesondere drei weiteren, Befestigungspunkten 18b nur mit dem entsprechenden sich in Längsrichtung des Feldhäckslers 1 erstreckenden Rahmenelement 13 kraft- und/oder formschlüssig verbunden sein.

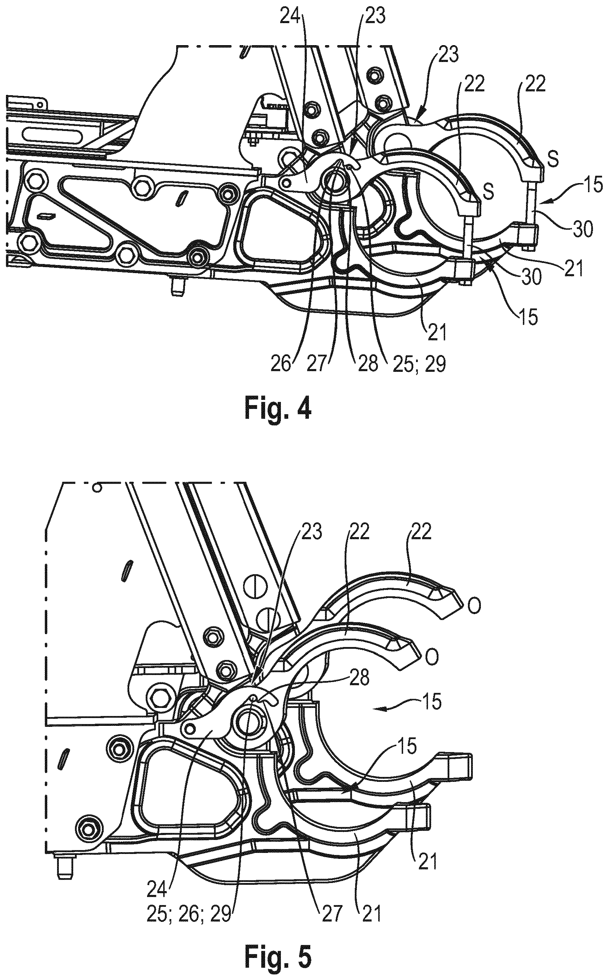

Wie bereits angedeutet dienen die beiden Klemmlager 15 der Lagerung der Häckseltrommelbaugruppe 3 des Feldhäckslers 1. Damit ein Ein- oder Ausbau der Häckseltrommelbaugruppe 3 möglich ist, muss das zweite Klemmlagerelement 22, das schwenkbar an dem ersten Klemmlagerelement 21 befestigt ist, aus einer Schließstellung S, die in FIG. 4 dargestellt ist und in der ein Ein- oder Ausbau der Häckseltrommelbaugruppe 3 nicht möglich ist, in eine Offenstellung bzw. Feststellposition O, die in FIG. 5 dargestellt ist und in der das Klemmlager 15 geöffnet ist, verschwenkt bzw. verbracht werden.

Damit ein oder mehrere mit dem Ein- oder Ausbau der Häckseltrommelbaugruppe 3 beauftragte Monteure das zweite Klemmlagerelement 22 während des Ein- oder Ausbaus der Häckseltrommelbaugruppe nicht dauerhaft in der Offenstellung O halten müssen, umfasst jedes Klemmlager 15 eine Sperreinrichtung 23, die der lösbaren Feststellung des zweiten Klemmlagerelements 22 in der Offenstellung bzw. Feststellposition O dient.

Die Sperreinrichtung 23 umfasst ein erstes Sperrelement 24, das an dem ersten Klemmlagerelement 21 angeordnet ist, sowie ein zweites Sperrelement 25, das an dem zweiten Klemmlagerelement 22 angeordnet ist, die miteinander zum Feststellen des zweiten Klemmlagerelements 22 in der Offenstellung bzw. Feststellposition O zusammenwirken. Das erste Sperrelement 24 ist schwenkbar an dem ersten Klemmlagerelement 21 angeordnet bzw. befestigt, das zweite Sperrelement 25 ist hingegen ortsfest bzw. positionsfest an dem zweiten Klemmlagerelement 22 angeordnet bzw. befestigt. Bei einem Verschwenken bzw. Verbringen des zweiten Klemmlagerelements 22 aus der Schließstellung S in die Offenstellung bzw. Feststellposition O bewegen sich die beiden Sperrelemente 24, 25 aufgrund ihrer Anordnung an den beiden Klemmlagerelementen 21, 22 relativ zueinander, wodurch die Feststellung des zweiten Klemmlagerelements 22 in der Offenstellung bzw. Feststellposition O realisiert wird.

Das erste Sperrelement 24 umfasst eine Ausnehmung 26, in die das zweite Sperrelement 25 in der Offenstellung bzw. Feststellposition O des zweiten Klemmlagerelements 22 zwecks der Feststellung desselben eingreift. Das erste Sperrelement 24 umfasst weiterhin eine Konturfläche 27, an der das zweite Sperrelement 25 bei einem Verschwenken bzw. Verbringen des zweiten Klemmlagerelements 22 aus der Schließstellung S in die Offenstellung bzw. Feststellposition O entlanggleitet. Die Ausnehmung 26 des ersten Sperrelements 24 ist vorzugsweise in der Konturfläche 27 des ersten Sperrelements 24 ausgebildet, wodurch das zweite Sperrelement 25 bei einem Verschwenken bzw. Verbringen des zweiten Klemmlagerelements 22 aus der Schließstellung S in die Offenstellung bzw. Feststellposition O entlang der Konturfläche 27 in die Ausnehmung 26 gleitet. Die Konturfläche 27 des ersten Sperrelements 24 ist vorzugsweise gekrümmt ausgebildet, wodurch insbesondere bei der in den FIGs. 3 bis 5 abgebildeten Ausführungsform der Sperreinrichtung 23, die nachfolgend noch beschrieben wird, eine exakte Führung des zweiten Sperrelements 25 in die Ausnehmung 26 des ersten Sperrelements 24 zum Feststellen des zweiten Klemmlagerelements 22 realisiert wird. Weiter vorzugsweise kann die Konturfläche 27 einen der Ausnehmung 26 in Gleitrichtung des zweiten Sperrelements 25 vorgelagerten Vorsprung 28 umfassen, der einem ungewollten Lösen des Eingriffs des zweiten Sperrelements 25 in die Ausnehmung 26 vorteilhaft entgegenwirkt.

Gemäß einer bevorzugten und in den FIGs. 3 bis 5 dargestellten Ausführungsform ist das erste Sperrelement 24 als Bügel und das zweite Sperrelement 25 als Eingreifvorsprung ausgebildet. Der Eingreifvorsprung ist vorzugsweise mittels eines in einer am zweiten Klemmlagerelement 22 ausgebildeten Ausnehmung 29, insbesondere einer Bohrung, angeordneten Befestigungsmittels, insbesondere einer Schraube oder eines Bolzens, ausgebildet. Alternativ hierzu kann das zweite Sperrelement 25 bzw. das als Eingreifvorsprung ausgebildete zweite Sperrelement 25 ein Bestandteil des zweiten Klemmlagerelements 22 sein, beispielsweise ein angeschweißter oder integral mit dem zweiten Klemmlagerelement 22 ausgebildeter Steg.

Alternativ zu der Ausgestaltung der Klemmeinrichtung 23 als eine Kombination von miteinander zusammenwirkendem Bügel (erstes Sperrelement 24) und Eingreifvorsprung (zweites Sperrelement 25) sind auch andere Ausgestaltungen der Klemmeinrichtung 23, die eine Feststellung des zweiten Klemmlagerelements 22 in der Offenstellung bzw. Feststellposition O ermöglichen, vorstellbar, beispielsweise eine Ausgestaltung in Form eines federbelasteten Rastmechanismus.

Die Klemmlager 15 umfassen weiterhin jeweils eine Spannschraube 30 mittels der das erste Klemmlagerelement 21 und das zweite Klemmlagerelement 22 in der Schließstellung S des zweiten Klemmlagerelements 22 miteinander befestigt werden, um die Häckseltrommelbaugruppe 3 zu fixieren. Hierzu umfassten sowohl das erste Klemmlagerelement 21 als auch das zweite Klemmlagerelement 22 eine Bohrung. Insbesondere ist die Bohrung im ersten Klemmlagerelement 21 als Durchgangsbohrung, die Bohrung im zweiten Klemmlagerelement 22 hingegen als Sacklochbohrung ausgebildet.

Die beschriebene Ausgestaltung der beiden Klemmlager 15 berücksichtigend kann ein Einbau einer Häckseltrommelbaugruppe 3 demnach beispielsweise wie folgt erfolgen. Zunächst wird die Spannschraube 30 jedes Klemmlagers 15 entfernt. Das zweite Klemmlagerelement 22 wird aus der Schließstellung S in die Offenstellung bzw. Feststellposition O verschwenkt bzw. verbracht. Während der Verschenkung bzw. Verbringung des zweiten Klemmlagerelements 22 aus der Schließstellung S in die Offenstellung bzw. Feststellposition O bewegen sich die beiden Sperrelemente 24, 25 der Sperreinrichtung 23 derart relativ zueinander, dass das zweite Klemmlagerelement 22 bei Erreichen der Offenstellung bzw. Feststellposition O mittels der Sperreinrichtung 23 festgestellt ist, indem das zweite Sperrelement 25 in die Ausnehmung 26 des ersten Sperrelements 24 eingreift. Ein selbsttätiges Zurückschwenken des zweiten Klemmlagerelements 22 aus der Offenstellung bzw. Feststellposition O aufgrund der Gewichtskraft des zweiten Klemmlagerelements 22 wird durch die Sperreinrichtung 23 verhindert. In der Offenstellung bzw. Feststellposition O des zweiten Klemmlagerelements 22 ist das entsprechende Klemmlager 15 geöffnet, so dass die Häckseltrommelbaugruppe 3 in das Klemmlager 15 eingesetzt werden kann. Während des Einbauvorgangs der Häckseltrommelbaugruppe 3 gelangt eine - in den FIGs. nicht dargestellte - Welle der Häckseltrommelbaugruppe 3, die von den Klemmlagern 15 aufgenommen wird und an der die Häckseltrommel 5 drehbar gelagert ist, in Kontakt mit dem zweiten Klemmlagerelement 22 eines jeden Klemmlagers 15. Hierdurch wird während des Einbauvorgangs der Häckseltrommelbaugruppe 3 das zweite Klemmlagerelement 22 über die Offenstellung bzw. Feststellposition O hinaus verschwenkt bzw. verbracht. Aufgrund der Bewegung des zweiten Klemmlagerelements 22 über die Offenstellung bzw. Feststellposition O hinaus, wird die Feststellung durch die Sperreinrichtung 23 gelöst. Befindet sich die Welle der Häckseltrommelbaugruppe 3 in ihrer finalen Einbauposition in jedem Klemmlager 15 schwenken die jeweiligen zweiten Klemmlagerelemente 22 selbsttätig in ihre jeweilige Schließstellung S zurück, in der das erste Klemmlagerelement 21 und das zweite Klemmlagerelement 22 mittels der Spannschraube 30 dann miteinander fixiert werden können. Bei einem Ausbau der Häckseltrommelbaugruppe 3 ist es nicht erforderlich, dass das zweite Klemmlagerelement 22 manuell in die Offenstellung bzw. Feststellposition O verschwenkt bzw. verbracht wird. Vielmehr wird das zweite Klemmlagerelement 22 durch ein Anheben der Häckseltrommelbaugruppe 3 über den Kontakt der Welle der Häckseltrommelbaugruppe 3 mit dem zweiten Klemmlagerelement 22 eines jeden Klemmlagers 15 in die Offenstellung bzw. Feststellposition O verschwenkt bzw. verbracht.

Es ist ebenfalls möglich, dass die Häckseltrommelbaugruppe 3, insbesondere die Welle der Häckseltrommelbaugruppe 3, bei ihrem Einbau nicht mit den zweiten Klemmlagerelementen 22 in Kontakt kommt, so dass sich die zweiten Klemmlagerelemente 22 in der finalen Einbauposition der Welle der Häckseltrommelbaugruppe 3 noch immer in der festgestellten Offenstellung bzw. Feststellposition O befinden. Durch eine manuelles Verschwenken bzw. Verbringen der zweiten Klemmlagerelemente 22 über die Offenstellung bzw. Feststellposition O hinaus, kann dann die Feststellung durch die Sperreinrichtung 23 gelöst werden und die zweiten Klemmlagerelemente 22 können in ihre Schließstellung S verschwenkt bzw. verbracht werden.

Gemäß einer Ausführungsform sind die Klemmlager 15 als sphärische Klemmlager 15 ausgebildet. Die beiden Klemmlagerelemente 21, 22 bilden gemeinsam das Klemmlager 15 mit zwei eine Konkavität aufweisenden Ringsektoren aus. In die Konkavität wird ein - in den FIGs. nicht dargestelltes - ringförmiges Element eingelegt, das wiederum vorgesehen ist, die Welle der Häckseltrommelbaugruppe 3 aufzunehmen. Die Konkavität der Ringsektoren sind Teil einer Kugelfläche, genauso wie die Außenumfangsfläche des ringförmigen Elements. Das ringförmige Element ist daher, wenn es in die Konkavität eingelegt ist, um zwei zur Welle der Häckseltrommelbaugruppe 3 orthogonal verlaufende Achsen schwenkbar. Wenn die Häckseltrommelbaugruppe 3 in die Klemmlager 15 eingesetzt bzw. eingelegt wird, kann sich die Ausrichtung ihrer Achse frei an eventuelle Toleranzen in Positionierung und Ausrichtung der Klemmlager 15 anpassen, so dass, wenn die Spannschraube 30 festgezogen und das ringförmige Element zwischen den durch das erste und zweite Klemmlagerelement 21, 22 gebildeten Ringsektoren fixiert bzw. geklemmt wird, daraus keine internen Spannungen in der Häckseltrommelbaugruppe 3 resultieren.

Die Kugelflächen der Konkavität der Ringsektoren und der Außenumfangsfläche des ringförmigen Elements haben jeweils gleiche Radien, so dass die Ringsektoren und das ringförmige Element im montierten Zustand der Häckseltrommelbaugruppe 3 einen großflächigen Kontakt miteinander ausbilden.

An einer Vorderseite des Gehäuses 17 der Häckseltrommelbaugruppe 3 ist ein in FIG. 2 dargestellter, vorzugsweise viereckig ausgestalteter, Adapter 31 vorgesehen, an den ein - in FIG. 2 nicht dargestellter - Erntevorsatz 9 montiert oder eine - in FIG. 2 ebenfalls nicht dargestellte - Hebemaschine zum Unterstützen des Ein- oder Ausbaus der Häckseltrommelbaugruppe 3 angekoppelt werden kann. Der Adapter 31 ist mit der Welle der Häckseltrommelbaugruppe 3 drehfest verbunden. Unter jedem der sich in Längsrichtung des Feldhäckslers 1 erstreckenden Rahmenelemente 13 erstreckt sich ein hydraulisches Stellglied 32 in Längsrichtung des Feldhäckslers 1. Ein hinteres Ende jedes Stellglieds 32 ist mit der Rahmenbaugruppe 12 verbunden, die vorderen Enden greifen gemeinsam an einen - in FIG. 2 nur angedeuteten - Querbalken 33 des Gehäuses 17 der Häckseltrommelbaugruppe 3 an. Indem die Stellglieder 32 gemeinsam ausfahren, schwenken bzw. verbringen sie das Gehäuse 17 der Häckseltrommelbaugruppe um die Rotationsachse 4 und positionieren dadurch den an den Adapter 31 montierten Erntevorsatz 9.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

| | | | |
|---|---|---|---|
| 1 | Feldhäcksler | 24 | erstes Sperrelement |
| 2 | Fahrerkabine | 25 | zweites Sperrelement |
| 3 | Häckseltrommelbaugruppe | 26 | Ausnehmung am ersten Sperrelement |
| 4 | Rotationsachse | | |
| 5 | Häckseltrommel | 27 | Konturfläche am ersten Sperrelement |
| 6 | Fördereinrichtung | | |
| 7 | Walzenpaar | 28 | Vorsprung am ersten Sperrelement |
| 8 | Walzenpaar | 29 | Ausnehmung am zweiten Klemmlagerelement |
| 9 | Erntevorsatz | | |
| 10 11 | Nachbeschleuniger | 30 | Spannschraube |
| | Auswurfkrümmer | 31 | Adapter für Erntevorsatz |
| 12 | Rahmenbaugruppe | 32 | hydraulisches Stellglied |
| 13 | Rahmenelement der Rahmenbaugruppe | 33 | Querbalken des Gehäuses der Häckseltrommelbaugruppe |
| 14 | Rahmenelement der Rahmenbaugruppe | O | Offenstellung bzw. Feststellposition des zweiten Klemmlagerelements |
| 15 | Klemmlager der Rahmenbaugruppe | | |
| | | S | Schließstellung des zweiten Klemmlagerelements |
| 16 | Riemenscheibe | | |
| 17 | Gehäuse | | |
| 18a | gemeinsamer Befestigungspunkt | | |
| 18b | weitere Befestigungspunkte | | |
| 19 | Anbindungsbereich der Querrahmenstrebe | | |
| 20 | Außenwandung des Rahmenelements | | |
| 21 | erstes Klemmlagerelement | | |
| 22 | zweites Klemmlagerelement | | |
| 23 | Sperreinrichtung | | |

## Patentansprüche

1. Feldhäcksler (1) mit einer Rahmenbaugruppe (12), wobei die Rahmenbaugruppe (12) zwei sich in Längsrichtung des Feldhäckslers (1) erstreckende Rahmenelemente (13), ein in Querrichtung des Feldhäckslers (1) zwischen den sich in Längsrichtung des Feldhäckslers (1) erstreckenden Rahmenelementen (13) angeordnetes Rahmenelement (14) und zwei Klemmlager (15) zur Lagerung einer Häckseltrommelbaugruppe (3) umfasst, wobei jeweils ein Klemmlager (15) jeweils einem sich in Längsrichtung des Feldhäckslers (1) erstreckenden Rahmenelement (13) zugeordnet ist, **dadurch gekennzeichnet, dass**
das in Querrichtung des Feldhäckslers (1) angeordnete Rahmenelement (14) mit jeweils einem sich in Längsrichtung des Feldhäckslers (1) erstreckenden Rahmenelement (13) sowie einem dem jeweiligen sich in Längsrichtung des Feldhäckslers (1) erstreckenden Rahmenelement (13) zugeordneten Klemmlager (15) in zumindest einem gemeinsamen Befestigungspunkt (18a) kraft- und/oder formschlüssig verbunden ist.

2. Feldhäcksler (1) nach Anspruch 1, **dadurch gekennzeichnet, dass** jedes Klemmlager (15) ein erstes Klemmlagerelement (21) und ein an dem ersten Klemmlagerelement (21) schwenkbar befestigtes zweites Klemmlagerelement (22) umfasst, wobei das in Querrichtung des Feldhäckslers (1) angeordnete Rahmenelement (14) mit dem jeweils einen sich in Längsrichtung des Feldhäckslers (1) erstreckenden Rahmenelement (13) sowie dem ersten Klemmlagerelement (21) des dem jeweiligen sich in Längsrichtung des Feldhäckslers (1) erstreckenden Rahmenelement (13) zugeordneten Klemmlagers (15) in dem zumindest einen gemeinsamen Befestigungspunkt (18a) kraft- und/oder formschlüssig verbunden ist.

3. Feldhäcksler (1) nach einem der Ansprüche 1 oder 2, **dadurch gekennzeichnet, dass** jedes der sich in Längsrichtung des Feldhäckslers (1) erstreckenden Rahmenelemente (13) als Hohlprofil ausgebildet ist, wobei die Klemmlager (15), insbesondere die ersten Klemmlagerelemente (21) der Klemmlager (15), in die als Hohlprofile ausgebildeten sich in Längsrichtung des Feldhäckslers (1) erstreckenden Rahmenelemente (13) zumindest bereichsweise eingesetzt sind.

4. Feldhäcksler (1) nach einem der Ansprüche 1 bis 3, **dadurch gekennzeichnet, dass** das in Querrichtung des Feldhäckslers (1) angeordnete Rahmenelement (14) zwei einander in Querrichtung des Feldhäckslers (1) gegenüberliegende Enden umfasst, wobei jedes Ende einen plattenförmig ausgebildeten Anbindungsbereich (19) umfasst, wobei das in Querrichtung des Feldhäckslers (1) angeordnete Rahmenelement (14) mittels jeweils eines plattenförmig ausgebildeten Anbindungsbereichs (19) mit dem jeweils einen sich in Längsrichtung des Feldhäckslers (1) erstreckenden Rahmenelement (13) sowie dem jeweiligen sich in Längsrichtung des Feldhäckslers (1) erstreckenden Rahmenelement (13) zugeordneten Klemmlager (15), insbesondere dem ersten Klemmlagerelement (21) des Klemmlagers (15), in dem zumindest einem gemeinsamen Befestigungspunkt (18a) kraft- und/oder formschlüssig verbunden ist.

5. Feldhäcksler (1) nach einem der Ansprüche 2 bis 4, **dadurch gekennzeichnet, dass** die ersten Klemmlagerelemente (21) der Klemmlager (15) und/oder die Anbindungsbereiche (19) des in Querrichtung des Feldhäckslers (1) angeordneten Rahmenelements (14) kraftflussoptimiert ausgestaltet sind und zwar derart, dass die ersten Klemmlagerelemente (21) und/oder die Anbindungsbereiche (19) in den für die Kraftleitung und Anbindung vorgesehenen Bereichen Materialanhäufungen aufweisen.

6. Feldhäcksler (1) nach einem der Ansprüche 2 bis 5, **dadurch gekennzeichnet, dass** die ersten Klemmlagerelemente (21) der Klemmlager (15) als Gussbauteile, insbesondere als Sphärogussbauteile, ausgebildet sind.

7. Feldhäcksler (1) nach einem der Ansprüche 1 bis 6, **dadurch gekennzeichnet, dass** das in Querrichtung des Feldhäckslers (1) angeordnete Rahmenelement (14) mit dem jeweils einen sich in Längsrichtung des Feldhäckslers (1) erstreckenden Rahmenelement (13) sowie dem dem jeweiligen sich in Längsrichtung des Feldhäckslers (1) erstreckenden Rahmenelement (13) zugeordneten Klemmlager (15) in einer Vielzahl gemeinsamer Befestigungspunkte (18a) kraft- und/oder formschlüssig verbunden ist.

8. Feldhäcksler (1) nach Anspruch 7, **dadurch gekennzeichnet, dass** das in Querrichtung des Feldhäckslers (1) angeordnete Rahmenelement (14) mit dem jeweils einen sich in Längsrichtung des Feldhäckslers (1) erstreckenden Rahmenelement (13) sowie dem dem jeweiligen sich in Längsrichtung des Feldhäckslers (1) erstreckenden Rahmenelement (13) zugeordneten Klemmlager (15) in vier gemeinsamen Befestigungspunkten (18a) kraft- und/oder formschlüssig verbunden ist.

9. Feldhäcksler (1) nach einem der Ansprüche 1 bis 8, **dadurch gekennzeichnet, dass** die Verbindung in dem zumindest einen Befestigungspunkt (18a) mittels einer Schraubverbindung, vorzugsweise mittels einer Durchschraubverbindung, ausgebildet ist.

10. Feldhäcksler (1) nach einem der Ansprüche 1 bis 9, **dadurch gekennzeichnet, dass** die Klemmlager (15) jeweils als sphärische Klemmlager (15) ausgebildet sind.

11. Feldhäcksler (1) nach einem der Ansprüche 1 bis 10, **dadurch gekennzeichnet, dass** die Häckseltrommelbaugruppe (3) eine in den Klemmlagern (15) drehbar aufgenommene Welle und einen mit der Welle drehfest verbundenen Adapter (31) für einen Erntevorsatz (9) umfasst.

12. Feldhäcksler (1) nach Anspruch 11, **dadurch gekennzeichnet, dass** die Häckseltrommelbaugruppe (3) eine an der Welle drehbar gelagerte Häckseltrommel (5) umfasst.

13. Feldhäcksler (1) nach Anspruch 11 oder 12, **dadurch gekennzeichnet, dass** der Feldhäcksler (1) wenigstens ein hydraulisches Stellglied (32) umfasst zum Antreiben einer Schwenkbewegung des Adapters (31).

## Claims

1. A forage harvester (1) with a frame assembly (12), wherein the frame assembly (12) comprises two frame elements (13) extending in the longitudinal direction of the forage harvester (1), a frame element (14) disposed in the transverse direction of the forage harvester (1) between the frame elements (13) extending in the longitudinal direction of the forage harvester (1) and two clamp bearings (15) for mounting a chopping drum assembly (3), wherein a respective clamp bearing (15) is associated with a respective frame element (13) extending in the longitudinal direction of the forage harvester (1),
**characterized in that**
the frame element (14) disposed in the transverse direction of the forage harvester (1) is connected in a force-fitting and/or interlocking manner to a respective frame element (13) extending in the longitudinal direction of the forage harvester (1) as well as to a clamp bearing (15) associated with the respective frame element (13) extending in the longitudinal direction of the forage harvester (1) in at least one common fixing point (18a).

2. The forage harvester (1) according to claim 1, **characterized in that** each clamp bearing (15) comprises a first clamp bearing element (21) and a second clamp bearing element (22) which is pivotably fixed to the first clamp bearing element (21), wherein the frame element (14) disposed in the transverse direction of the forage harvester (1) is connected in a force-fitting and/or interlocking manner to the respective frame element (13) extending in the longitudinal direction of the forage harvester (1) as well as to the first clamp bearing element (21) of the clamp bearing (15) associated with the respective frame element (13) extending in the longitudinal direction of the forage harvester (1) in the at least one common fixing point (18a).

3. The forage harvester (1) according to claim 1 or claim 2, **characterized in that** each of the frame elements (13) extending in the longitudinal direction of the forage harvester (1) is constructed as a hollow profile, wherein the clamp bearings (15), in particular the first clamp bearing elements (21) of the clamp bearing (15), are inserted, at least in regions, into the frame element (13) extending in the longitudinal direction of the forage harvester (1) constructed as a hollow profile.

4. The forage harvester (1) according to one of claims 1 to 3, **characterized in that** the frame element (14) disposed in the transverse direction of the forage harvester (1) comprises two ends which are opposite each other in the transverse direction of the forage harvester (1), wherein each end comprises an attachment region (19) which is plate-shaped in configuration, wherein the frame element (14) disposed in the transverse direction of the forage harvester (1) is connected, in a force-fitting and/or interlocking manner in the at least one common fixing point (18a) by means of a respective plate-shaped attachment region (19), to each respective frame element (13) extending in the longitudinal direction of the forage harvester (1) as well as to the clamp bearing (15) associated with the respective frame element (13) extending in the longitudinal direction of the forage harvester (1), in particular with the first clamp bearing element (21) of the clamp bearing (15).

5. The forage harvester (1) according to one of claims 2 to 4, **characterized in that** the first clamp bearing elements (21) of the clamp bearing (15) and/or the attachment regions (19) of the frame element (14) disposed in the transverse direction of the forage harvester (1) are configured for an optimized flow of forces and in fact in a manner such that the material of the first clamp bearing elements (21) and/or the attachment regions (19) is built up in the regions provided for the transmission of forces and for attachment.

6. The forage harvester (1) according to one of claims 2 to 5, **characterized in that** the first clamp bearing elements (21) of the clamp bearing (15) are constructed as cast components, in particular as spheroidal graphite iron components.

7. The forage harvester (1) according to one of claims 1 to 6, **characterized in that** the frame element (14) disposed in the transverse direction of the forage harvester (1) is connected, in a force-fitting and/or interlocked manner in a plurality of common fixing points (18a), to each respective frame element (13) extending in the longitudinal direction of the forage harvester (1) as well as with the clamp bearing (15) associated with the respective frame element (13) extending in the longitudinal direction of the forage harvester (1).

8. The forage harvester (1) according to claim 7, **characterized in that** the frame element (14) disposed in the transverse direction of the forage harvester (1) is connected, in a force-fitting and/or interlocked manner in four common fixing points (18a), to each respective frame element (13) extending in the longitudinal direction of the forage harvester (1) as well as with the clamp bearing (15) associated with the respective frame element (13) extending in the longitudinal direction of the forage harvester (1).

9. The forage harvester (1) according to one of claims 1 to 8, **characterized in that** the connection in the at least one fixing point (18a) is implemented by means of a screw connection, preferably by means of a through-bolt connection.

10. The forage harvester (1) according to one of claims 1 to 9, **characterized in that** the respective clamp bearings (15) are constructed as spherical clamp bearings (15).

11. The forage harvester (1) according to one of claims 1 to 10, **characterized in that** the chopping drum assembly (3) comprises a shaft which is received for rotation in the clamp bearings (15) and an adapter (31) for a harvester front assembly (9) which is connected to the shaft in a manner which is fixed against rotation.

12. The forage harvester (1) according to claim 11, **characterized in that** the chopping drum assembly (3) comprises a chopping drum (5) which is mounted for rotation on the shaft.

13. The forage harvester (1) according to claim 11 or claim 12, **characterized in that** the forage harvester (1) comprises at least one hydraulic actuator (32) for actuating a pivotal movement of the adapter (31).

## Revendications

1. Ramasseuse-hacheuse (1) dotée d'un module de cadre (12), où le module de cadre (12) comprend deux éléments de cadre (13) s'étendant dans la direction longitudinale de la ramasseuse-hacheuse (1), un élément de cadre (14) disposé entre les éléments de cadre (13) s'étendant dans la direction longitudinale de la ramasseuse-hacheuse (1), dans la direction transversale de la ramasseuse-hacheuse (1), et deux paliers de serrage (15) destinés au support d'un module de tambour hacheur (3), un palier de serrage (15) étant respectivement associé à un élément de cadre (13) s'étendant dans la direction longitudinale de la ramasseuse-hacheuse (1),
**caractérisé en ce que**
l'élément de cadre (14) disposé dans la direction transversale de la ramasseuse-hacheuse (1) est relié, en au moins un point de fixation (18a) commun, par adhérence et/ou par forme respectivement à un élément de cadre (13) s'étendant dans la direction longitudinale de la ramasseuse-hacheuse (1), ainsi qu'à un palier de serrage (15) associé à l'élément de cadre (13) respectif s'étendant dans la direction longitudinale de la ramasseuse-hacheuse (1).

2. Ramasseuse-hacheuse (1) selon la revendication 1, **caractérisée en ce que** chaque palier de serrage (15) comprend un premier élément de palier de serrage (21) et un deuxième élément de palier de serrage (22) fixé avec possibilité de pivotement au premier élément de palier de serrage (21), sachant que l'élément de cadre (14) qui est disposé dans la direction transversale de la ramasseuse-hacheuse (1) est relié, dans le point de fixation (18a) commun, au nombre d'au moins un, par adhérence et/ou par forme à l'élément de cadre (13) respectif s'étendant dans la direction longitudinale de la ramasseuse-hacheuse (1), ainsi qu'au premier élément de palier de serrage (21) du palier de serrage (15) associé à l'élément de cadre (13) respectif s'étendant dans la direction longitudinale de la ramasseuse-hacheuse (1).

3. Ramasseuse-hacheuse (1) selon une des revendications 1 ou 2, **caractérisée en ce que** chacun des éléments de cadre (13) s'étendant dans la direction longitudinale de la ramasseuse-hacheuse (1) est réalisé sous forme de profilé creux, sachant que les paliers de serrage (15), en particulier les premiers éléments de palier de serrage (21) des paliers de serrage (15), sont montés au moins en partie dans les éléments de cadre (13) réalisés comme profilés creux et s'étendant dans la direction longitudinale de la ramasseuse-hacheuse (1).

4. Ramasseuse-hacheuse (1) selon une des revendications 1 à 3, **caractérisée en ce que** l'élément de cadre (14) disposé dans la direction transversale de la ramasseuse-hacheuse (1) comporte deux extrémités opposées dans la direction transversale de la ramasseuse-hacheuse (1), chaque extrémité comprenant une zone d'attache (19) réalisée sous forme de plaque, l'élément de cadre (14) qui est disposé dans la direction transversale de la ramasseuse-hacheuse (1) étant relié, dans le point de fixation (18a) commun, au nombre d'au moins un, par adhérence et/ou par forme, respectivement au moyen d'une zone d'attache (19) réalisée sous forme de plaque, à l'élément de cadre (13) respectif s'étendant dans la direction longitudinale de la ramasseuse-hacheuse (1), ainsi qu'au palier de serrage (15) associé à l'élément de cadre (13) respectif s'étendant dans la direction longitudinale de la ramasseuse-hacheuse (1), en particulier au premier élément de palier de serrage (21) du palier de serrage (15).

5. Ramasseuse-hacheuse (1) selon une des revendications 2 à 4, **caractérisée en ce que** les premiers éléments de palier de serrage (21) des paliers de serrage (15) et/ou les zones d'attache (19) de l'élément de cadre (14) disposé dans la direction transversale de la ramasseuse-hacheuse (1) sont réalisés avec optimisation du flux de force, de telle manière que les premiers éléments de palier de serrage (21) et/ou les zones d'attache (19) présentent des accumulations de matière dans les zones prévues pour la conduction des forces et le raccordement.

6. Ramasseuse-hacheuse (1) selon une des revendications 2 à 5, **caractérisée en ce que** les premiers éléments de palier de serrage (21) des paliers de serrage (15) sont réalisés sous forme de pièces coulées, notamment de pièces coulées en fonte à graphite sphéroïdal.

7. Ramasseuse-hacheuse (1) selon une des revendications 1 à 6, **caractérisée en ce que** l'élément de cadre (14) disposé dans la direction transversale de la ramasseuse-hacheuse (1) est relié, dans une pluralité de points de fixation (18a) communs, par adhérence et/ou par forme à l'élément de cadre (13) respectif s'étendant dans la direction longitudinale de la ramasseuse-hacheuse (1), ainsi qu'au palier de serrage (15) associé à l'élément de cadre (13) respectif s'étendant dans la direction longitudinale de la ramasseuse-hacheuse (1).

8. Ramasseuse-hacheuse (1) selon la revendication 7, **caractérisée en ce que** l'élément de cadre (14) disposé dans la direction transversale de la ramasseuse-hacheuse (1) est relié, dans quatre points de fixation (18a) communs, par adhérence et/ou par forme à l'élément de cadre (13) respectif s'étendant dans la direction longitudinale de la ramasseuse-hacheuse (1), ainsi qu'au palier de serrage (15) associé à l'élément de cadre (13) respectif s'étendant dans la direction longitudinale de la ramasseuse-hacheuse (1).

9. Ramasseuse-hacheuse (1) selon une des revendications 1 à 8, **caractérisée en ce que** la liaison dans le point de fixation (18a), au nombre d'au moins un, est réalisée au moyen d'un assemblage par vis, de préférence au moyen d'un assemblage par vis traversante.

10. Ramasseuse-hacheuse (1) selon une des revendications 1 à 9, **caractérisée en ce que** les paliers de serrage (15) sont réalisés respectivement comme paliers de serrage (15) sphériques.

11. Ramasseuse-hacheuse (1) selon une des revendications 1 à 10, **caractérisée en ce que** le module de tambour hacheur (3) comprend un arbre, monté tournant dans les paliers de serrage (15), et un adaptateur (31) relié de façon solidaire à l'arbre et destiné à un outil frontal de récolte (9).

12. Ramasseuse-hacheuse (1) selon la revendication 11, **caractérisée en ce que** le module de tambour hacheur (3) comprend un tambour hacheur (5) monté tournant sur l'arbre.

13. Ramasseuse-hacheuse (1) selon la revendication 11 ou 12, **caractérisée en ce que** la ramasseuse-hacheuse (1) comprend au moins un actionneur (32) hydraulique destiné à entraîner un mouvement pivotant de l'adaptateur (31).
